# EUROPÄISCHE PATENTANMELDUNG

(11) **EP 2 023 576 A2**
(43) Veröffentlichungstag der Anmeldung: **11.02.2009**
(21) Anmeldenummer: 08103429.0
(22) Anmeldetag: 08.04.2008
(51) Int. Cl.: H04L 29/08, G07C 5/00, G07B 15/00, G08G 1/123

(54) **Verfahren und System zum Bereitstellen teilnehmerspezifischer Dienste**

(30) Priorität: 12.04.2007 DE 102007017257
(71) Anmelder: SIEMENS AKTIENGESELLSCHAFT, 80333 München (DE)
(72) Erfinder: Langen, Manfred, 81827, München (DE)

(57) **Zusammenfassung**

System (1) und Verfahren zum Bereitstellen teilnehmerspezifischer Dienste für Teilnehmer (2), wobei eine an einer mobilen Einheit (4) eines Teilnehmers (2) angebrachte Erfassungseinheit (5) nach ihrer Aktivierung Zeitdaten und Ortsdaten der mobilen Einheit (4) in einer Aufzeichnungssprache über eine Funkschnittstelle an einen Server (3) überträgt, der anhand von Teilnehmerprofildaten des jeweiligen Teilnehmers (2) und der Zeit- und Ortsdaten einen teilnehmerspezifischen Dienst bereitstellt. Das System bietet dem Teilnehmer (2) eine konfigurierbare Dienstleitungsplattform, um beispielsweise beliebige Dienstleistungen für mobile Einheiten (4), beispielsweise Fahrzeuge, in Anspruch zu nehmen, wie die Führung eines elektronischen Fahrtenbuchs oder ein Fahrzeug-Flottenmanagement.

## Beschreibung

Die Erfindung betrifft ein Verfahren und System zum Bereitstellen teilnehmerspezifischer Dienste für verschiedene Teilnehmer mittels einer Dienstplattform.

Herkömmliche Systeme, die lokal an einem Endgerät eines Teilnehmers installiert werden, stellen dem Teilnehmer keine konfigurierbare Plattform für Dienstleistungen für dessen mobile Geräte zur Verfügung.

Herkömmliche Verfahren, wie beispielsweise Paketverfolgungsverfahren, verwenden Sekundärdaten, um einen Aufenthaltsort einer Ware zu bestimmen. Beispielsweise wird eine Ware an einem Lagereingang eines Warenlagers gescannt, bevor sie in dem Warenlager eingelagert wird. Nach der Einlagerung der Ware geht man davon aus, dass sich die Ware in dem Lager befindet. Bei RFID-Logistik-Systemen werden die Waren mit RFID-Tags versehen, die über eine autonome Sendeeinheit verfügen. Die RFID-Tags senden ihre Kennung an ein Lesegerät. Bei einem derartigen herkömmlichen Logistik-System erfolgt somit die Ortsbestimmung anhand des Aufenthaltsortes des Lesegerätes. Da die mit RFID-Tags versehenen Waren nicht mobil sind und somit die Differenz zwischen dem Aufenthaltsort des Lesegerätes und der Position der mit dem RFID-Tag versehenen Ware konstant bleibt, ist die Ableitung des Aufenthaltsortes der Ware der Aufenthaltsort des Lesegerätes in diesen Fällen ausreichend.

Ändern sich allerdings die Ortsdaten, beispielsweise bei einem mobilen Gerät, ist die schwankende Differenz zwischen dem Aufenthaltsort des Gerätes und dem Lesegerät zu ungenau für mobile Dienstleistungen bzw. der Aufenthaltsort des mobilen Gerätes kann nicht ausreichend genau angegeben werden.

Es ist daher die Aufgabe der vorliegenden Erfindung, ein Verfahren und ein System zum Bereitstellen teilnehmerspezifischer Dienste für Teilnehmer mit mobilen Geräten zu schaffen.

Die Erfindung schafft ein System zum Bereitstellen teilnehmerspezifischer Dienste für Teilnehmer, wobei eine an einem mobilen Gerät des Teilnehmers angebrachte Erfassungseinheit nach ihrer Aktivierung Zeitdaten und Ortsdaten des jeweiligen mobilen Gerätes in einer Aufzeichnungssprache über eine Funkschnittstelle an einen Server überträgt, der anhand von Teilnehmerprofildaten des jeweiligen Teilnehmers und der Zeit- und Ortsdaten einen teilnehmerspezifischen Dienst bereitstellt.

Bei einer Ausführungsform des erfindungsgemäßen Systems weist jede Erfassungseinheit eine eindeutige Identifizierung (Global-ID) auf.

Bei einer Ausführungsform des erfindungsgemäßen Systems weist die Erfassungseinheit einen Schalter zur manuellen Aktivierung/Deaktivierung auf.

Bei einer Ausführungsform des erfindungsgemäßen Systems ist die Erfassungseinheit über eine Schnittstelle mit dem mobilen Gerät zur automatischen Aktivierung/Deaktivierung durch das mobile Gerät verbunden.

Bei einer Ausführungsform des erfindungsgemäßen Systems weist die Erfassungseinheit ein Modul zur lokalen Erzeugung von Ortsdaten und ein Modul zur lokalen Erzeugung von Zeitdaten auf.

Bei einer Ausführungsform des erfindungsgemäßen Systems weist die Erfassungseinheit einen Sender auf, der die Zeit- und Ortsdaten in einem XML-Datenformat zusammen mit der Identifizierung (Global-ID) der Erfassungseinheit sendet.

Bei einer Ausführungsform des erfindungsgemäßen Systems werden die Zeit- und Ortsdaten einer Erfassungseinheit nach ihrer Aktivierung in regelmäßigen Zeitabständen gesendet.

Bei einer Ausführungsform des erfindungsgemäßen Systems besteht die Funkschnittstelle zwischen dem Sender der Erfassungseinheit und einer Basisstation eines zellularen Funknetzes.

Bei einer Ausführungsform des erfindungsgemäßen Systems ist die Basisstation über ein Datennetz mit dem Server verbunden.

Bei einer Ausführungsform des erfindungsgemäßen Systems konfiguriert ein Teilnehmer über ein Endgerät seine Teilnehmerprofildaten bei dem Server.

Bei einer Ausführungsform des erfindungsgemäßen Systems weist die Erfassungseinheit eine Verschlüsselungseinrichtung zur Verschlüsselung der Zeit- und Ortsdaten auf.

Die Erfindung schafft ferner eine Erfassungseinheit zum Bereitstellen von Ort- und Zeitdaten für einen teilnehmerspezifischen Dienst, mit:
- einem Modul zur lokalen Erzeugung von Ortsdaten,
- einem Modul zur lokalen Erzeugung von Zeitdaten, und mit
- einem Sender, der nach Aktivierung der Erfassungseinheit die erzeugten Zeit- und Ortsdaten in einer Aufzeichnungssprache über eine Funkschnittstelle überträgt.

Die Erfindung schafft ferner ein Verfahren zum Bereitstellen teilnehmerspezifischer Dienste für Teilnehmer, wobei eine an einem mobilen Gerät eines Teilnehmers angebrachte Erfassungseinheit nach ihrer Aktivierung Zeit- und Ortsdaten des jeweiligen mobilen Gerätes in einer Aufzeichnungssprache über eine Funkschnittstelle an einen Server überträgt, der anhand von Teilnehmerprofildaten des jeweiligen Teilnehmers und der Zeit- und Ortsdaten einen teilnehmerspezifischen Dienst bereitstellt.

Im Weiteren werden bevorzugte Ausführungsformen des erfindungsgemäßen Systems und des erfindungsgemäßen Verfahrens zum Bereitstellen teilnehmerspezifischer Dienste unter Bezugnahme auf die beigefügten Figuren beschrieben.

Es zeigen:
- Figur 1:: ein Diagramm zur Darstellung einer möglichen Ausführungsform des erfindungsgemäßen Systems zum Bereitstellen teilnehmerspezifischer Dienste;
- Figur 2:: eine mögliche Ausführungsform des erfindungsgemäßen Systems zum Bereitstellen teilnehmerspezifischer Dienste für Teilnehmer;
- Figur 3:: ein Blockschaltbild einer möglichen Ausführungsform der erfindungsgemäßen Erfassungseinheit zum Bereitstellen von Orts- und Zeitdaten für einen teilnehmerspezifischen Dienst;
- Figur 4:: Beispiele für mögliche Datensätze zur Erläuterung des erfindungsgemäßen Systems zum Bereitstellen teilnehmerspezifischer Dienste für Teilnehmer;
- Figur 5:: ein Beispiel für einen einem Teilnehmer zur Verfügung gestellten teilnehmerspezifischen Dienst.

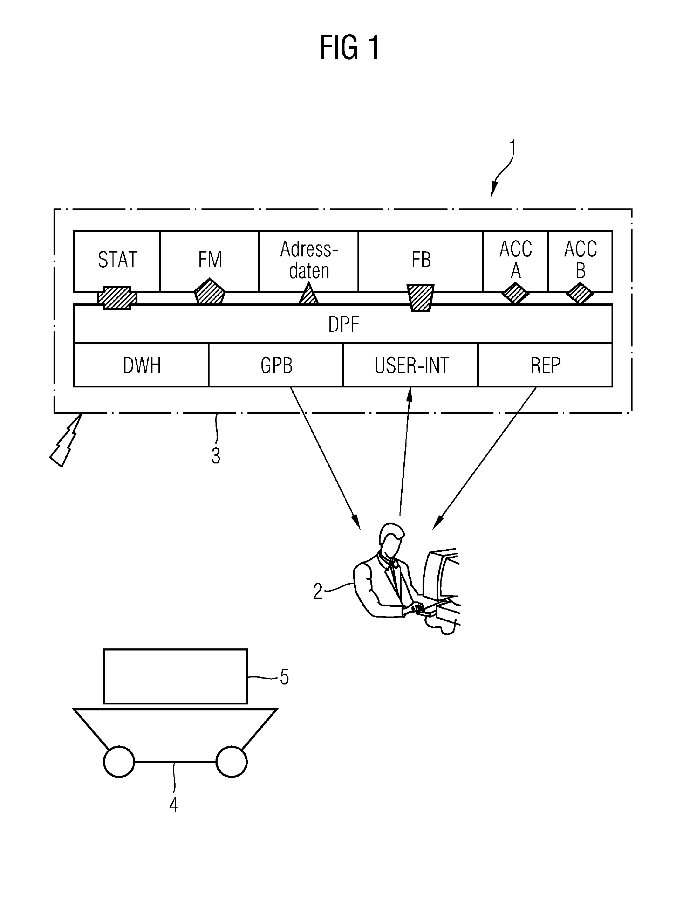

Figur 1 zeigt ein Diagramm zur Darstellung einer möglichen Ausführungsform des erfindungsgemäßen Systems 1 zum Bereitstellen teilnehmerspezifischer Dienste für Teilnehmer 2. Der Teilnehmer 2 ist beispielsweise über ein Datennetz mit mindestens einem Server 3 verbunden, der dem Teilnehmer 2 eine Diensteplattform zur Verfügung stellt. Die Diensteplattform DPF umfasst einerseits Basisdienste, die der Dienstbetreiber selbst betreut, und gegebenenfalls weitere Zusatzdienste, die über offene Schnittstellen von Drittanbietern angeboten werden. Der Teilnehmer 2 verfügt über mindestens ein zugehöriges mobiles Gerät 4, an dem eine zugehörige Erfassungseinheit 5 angebracht ist. Die Erfassungseinheit 5 überträgt nach ihrer Aktivierung Zeit- und Ortsdaten des jeweiligen mobilen Gerätes 4 in einer deskriptiven Aufzeichnungssprache, beispielsweise in einem XML-Datenformat, über eine Funkschnittstelle an den Server 3. Der Server 3 stellt anhand der Teilnehmerprofildaten des Teilnehmers 2 sowie anhand der Zeit- und Ortsdaten, die der Server 3 von der Erfassungseinheit 5 erhält, einen teilnehmerspezifischen Dienst bereit.

Die in Figur 1 dargestellten Basisdienste enthalten ein Data Warehouse DWH, eine Geodatenbank GDB, eine Benutzerschnittstelle User-Int sowie eine Einheit REP zur Generierung von Berichten und Benachrichtigungen für den jeweiligen Teilnehmer 2. In dem Data Warehouse DWH werden alle über die Funkschnittstelle eingehenden Daten bezogen auf zugehörige mobile Geräte 4 mittels eindeutigen Identifizierungen (Global-ID) der Geräte 4 gespeichert. Die eindeutige Identifizierung (Global-ID) ist zunächst an die Erfassungseinheit 5 gekoppelt und wird durch Konfiguration mit dem Gerät 4 verknüpft. Die Geodatenbank GDB verbindet die empfangenen Ortskoordinaten bzw. Ortsdaten mit Kartendaten geographischer Karten und verknüpft diese bei Bedarf zu deren Visualisierung. Über eine Benutzerschnittstelle User-Int kann der Teilnehmer 2 ein persönliches Teilnehmerprofil eingeben und zusätzlich eine Konfiguration der von ihm gewünschten Dienste vornehmen. Auf Wunsch erhält der Teilnehmer Berichte über die durchgeführten Dienstleistungen sowie sonstige Benachrichtigungen. Die durch die Diensteplattform zur Verfügung gestellten Basisdienste sind jederzeit erweiterbar. Dabei können die Basisdienste auch an Drittanbieter outgesourct werden.

Weiterhin stellt der Server 3 in seiner Diensteplattform Zusatzdienste bereit, beispielsweise statistische Verfahren zur Auswertung der in dem Date Warehouse abgelegten Zeit- und Ortsdaten von Geräten 4. Ein Flotten-Management-Zusatzdienst FM erlaubt beispielsweise die Auswertung für eine definierte Gruppe von mobilen Geräten 4, insbesondere von Transportfahrzeugen eines Spediteurs. Als weiterer Zusatzdienst können beispielsweise Adressdaten mit den Ortsdaten in Bezug gesetzt werden, wobei neben einfachen Hausadressen auch sogenannte Points of Interest gekennzeichnet werden. Dieser Zusatzdienst kann auch auf mehrere Anbieter verteilt werden, beispielsweise ein Drittanbieter für Hoteladressen sowie Restaurantadressen und ein weiterer Drittanbieter für Sehenswürdigkeiten.

Ein weiterer möglicher Zusatzdienst besteht in einem elektronischen Fahrtenbuch FB, das aufgrund der in dem Data Warehouse DWH abgespeicherten Zeit- und Ortsdaten automatisch erstellt und dem jeweiligen Teilnehmer 2 zur Verfügung gestellt wird.

Weitere mögliche Zusatzdienste bestehen in einer Abrechnungserstellung ACCA, ACCB von kostenpflichtigen Diensten, beispielsweise Maut-Systeme, um Geld direkt bei dem Teilnehmer 2 einzuziehen bzw. ihm entsprechende Rechnungen zukommen zu lassen. Bei dem in Figur 1 dargestellten mobilen Gerät kann es sich um ein beliebiges mobiles Gerät handeln, beispielsweise ein Handy, ein PDA, aber auch um Fahrzeuge, insbesondere Warentransportfahrzeuge oder Personentransportfahrzeuge. Die von der Erfassungseinheit 5 generierten Orts- und Zeitdaten werden als Rohdaten über eine Funkschnittstelle, beispielsweise an eine Basisstation eines Zugangsnetzwerkes übertragen, wobei die Daten in einer offenen deskriptiven Aufzeichnungssprache gesendet werden. Die Daten werden beispielsweise in einem XML-Standardformat drahtlos von der Erfassungseinheit 5 über die Funkschnittstelle übertragen. Bei einer möglichen Ausführungsform werden die Daten dabei verschlüsselt an die Diensteplattform des Servers 3 übermittelt.

Das erfindungsgemäße System 1 zum Bereitstellen teilnehmerspezifischer Dienste eignet sich nicht nur für mobile Geräte 4, sondern auch allgemein für sonstige mobile Einheiten, beispielsweise Nutztiere, an denen eine Erfassungseinheit 5 angebracht ist. Beispielsweise kann die Erfassungseinheit 5 an einem Ohr einer Kuh als mobile Einheit befestigt werden. Auf diese Weise kann ein Bauer als Teilnehmer 2 bestimmte Dienste für seinen Landwirtschaftsbetrieb in Anspruch nehmen. Durch die erfassten Orts- und Zeitdaten kann die Diensteplattform des erfindungsgemäßen Systems 1 auch Aussagen über die Geschwindigkeit der jeweiligen mobilen Einheit bzw. des mobilen Gerätes treffen.

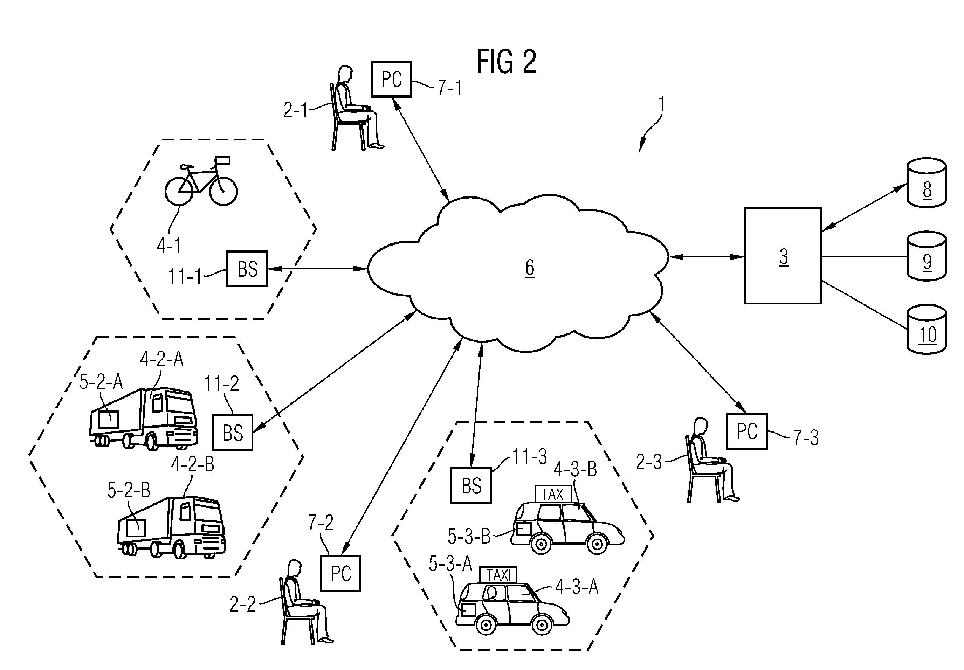

Figur 2 zeigt eine mögliche Ausführungsform des erfindungsgemäßen Systems 1 zum Bereitstellen teilnehmerspezifischer Dienste für Teilnehmer 2. Bei dieser Ausführungsform ist der Server 3, welcher die teilnehmerspezifischen Dienste für die Teilnehmer 2 bereitstellt, über ein Netzwerk 6 mit verschiedenen mobilen oder stationären Endgeräten 7 verschiedener Teilnehmer 2 verbunden. Weiterhin ist der Server 3 mit verschiedenen Datenbanken, z. B. einen Data Warehouse 8, einer Geodatenbank 9 und einer Teilnehmerprofildatenbank 10 verbunden.

Bei dem in Figur 2 dargestellten Beispiel verfügt jeder der Teilnehmer 2 über mobile Einheiten 4 bzw. mobile Geräte 4. Beispielsweise besitzt der Teilnehmer 2-1 als mobiles Gerät ein Mountainbike 4-1, an dem eine Erfassungseinheit 5-1 angebracht ist. Bei dem zweiten Teilnehmer 2-2 handelt es sich beispielsweise um einen Spediteur, der mehrere LKWs zum Transport von Waren zur Verfügung hat, beispielsweise die LKWs 4-2A, 4-2B, die jeweils mit einer Erfassungseinheit versehen sind. Bei dem dritten Teilnehmer 2-3 handelt es sich beispielsweise um einen Taxiunternehmer, der über zwei verschiedene Taxis 4-3A, 4-3B verfügt, an denen jeweils eine Erfassungseinheit 5-3A, 5-3B angebracht ist. Der Aufenthaltsort des jeweiligen Gerätes 4 wird lokal über die jeweilige Erfassungseinheit 5 ermittelt und beispielsweise über eine Basisstation 11 eines Zugangsnetzes über das Netzwerk 6 an den Server 3 übertragen. Die Zeit- und Ortsdaten werden durch die Erfassungseinheit 5 lokal generiert und, d. h. die Zeit- und Ortsdaten geben exakt den Zeitpunkt und den genauen Ort der jeweiligen mobilen Einheit 4 wieder.

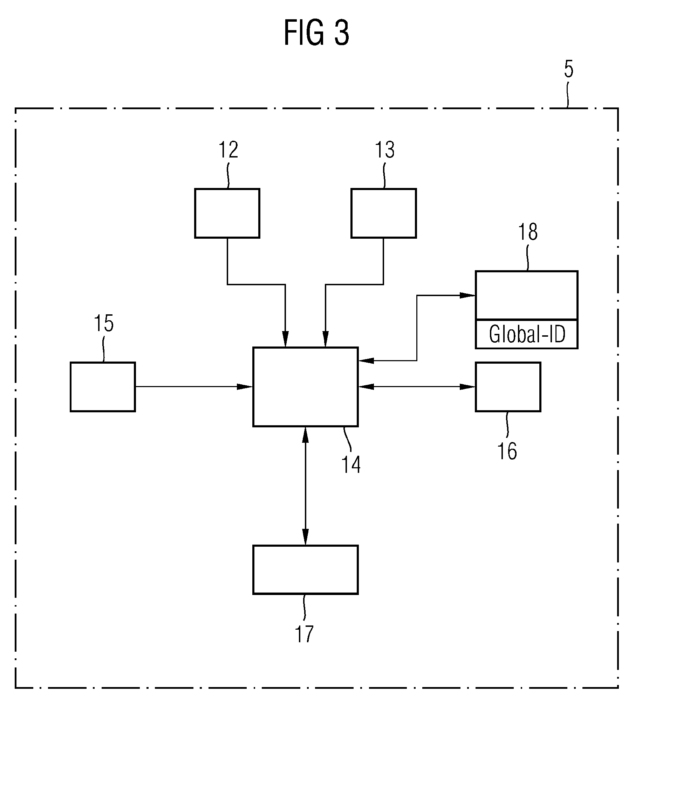

Figur 3 zeigt ein Blockschaltbild einer möglichen Ausführungsform einer Erfassungseinheit 5. Die Erfassungseinheit 5 ist beispielsweise in einem Chip bzw. einer Chipkarte integriert. Die Erfassungseinheit 5 erfasst sowohl die Zeit als auch die Ortsdaten der zugehörigen daran angebrachten mobilen Einheit 4. Die Erfassungseinheit 5 verfügt über ein erstes Modul 12 zur lokalen Erzeugung der Ortsdaten, beispielsweise über ein GPS-Modul. Darüber hinaus enthält die Erfassungseinheit 5 ein zweites Modul zur lokalen Erzeugung von Zeitdaten, beispielsweise eine lokale Uhr. Das Ortsmodul 12 und das Zeitmodul 13 sind an eine Datenverarbeitungseinheit, beispielsweise eine CPU 14, angeschlossen. Die CPU 14 ist über einen Schalter 15 durch einen Teilnehmer manuell aktivierbar bzw. deaktivierbar. Eine automatische Aktivierung bzw. eine automatische Deaktivierung der CPU 14 kann über ein Interface 16 erfolgen, das die CPU 14 mit dem zugehörigen mobilen Gerät 4 verbindet. Beispielsweise wird die Erfassungseinheit 5 automatisch aktiviert, wenn ein Nutzer einen Lastkraftwagen als mobiles Gerät startet. Die CPU 14 ist ferner mit einem Transceiver 17 verbunden, der die Zeit- und Ortsdaten in einem geeigneten Datenformat über die Funkschnittstelle überträgt. Dabei werden die Daten in einer deskriptiven Aufzeichnungssprache über die Funkschnittstelle beispielsweise an eine Basisstation 11 gesendet. Die CPU 14 ist ferner an einen Speicher 18 angeschlossen, in dem die eindeutige Identifizierung (Global-ID) der Erfassungseinheit 5 abgelegt ist.

Bei einer möglichen Ausführungsform werden die Zeit- und Ortsdaten, die durch das Ortsmodul 12 und das Zeitmodul 13 erzeugt werden, nach der Aktivierung der Erfassungseinheit 5 durch einen Schalter 15 bzw. durch das Interface 16 in regelmäßigen Zeitabständen durch den Transceiver 17 in einem vorgegebenen Datenformat, beispielsweise in einem XML-Datenformat, ausgestrahlt. Die Daten werden dabei in einem nicht-proprietären Datenformat bzw. offenen Datenformat gesendet, wobei es sich bei dem offenen Datenformat um ein genormtes oder um ein nicht-genormtes Datenformat handeln kann, beispielsweise ASCII-Code oder um ein XML-Datenformat. Weitere deskriptive Mark-up Languages (Aufzeichnungssprachen), sind beispielsweise HTML, DocBook, TEI, XML, WML, XAML oder SVG. Bei XML handelt es sich um eine Standardsprache zur Definition von individuellen Mark-up Languages bzw. Aufzeichnungssprachen. Bei XML handelt es sich um eine Untermenge des ISO-Standard SGML. SGML kann auf verschiedenen Betriebssystemen und für unterschiedliche Anwendungen eingesetzt werden. XML stellt ebenso wie HTML eine verknüpfungsorientierte Programmiersprache für Webinhalte dar. Darüber hinaus bietet XML eine allgemeine Syntax, um hierarchisch strukturierte Daten zu beschreiben. XML basiert auf der Trennung von Inhalten und deren Darstellung bzw. deren Struktur. Dadurch kann das Layout eines Dokuments durch in dem Dokument verankerte Formatierungshinweise, den sogenannten Tags, bestimmt wird. Für die Trennung von Struktur und Inhalt benutzt XML eine sogenannte Document Type Definition DTD oder ein XML-Schema. Mit XML können sowohl textbezogene Informationen als auch zwei- und dreidimensionale pixelorientierte Graphiken und skalierbare Vektorgraphiken beschrieben werden. XML-Dokumente können sowohl von Menschen als auch von Computern gelesen werden.

Der Server 3 verfügt über einen XML-Parser, d. h. Programme, die XML-Daten auslesen, interpretieren und gegebenenfalls deren Gültigkeit überprüfen.

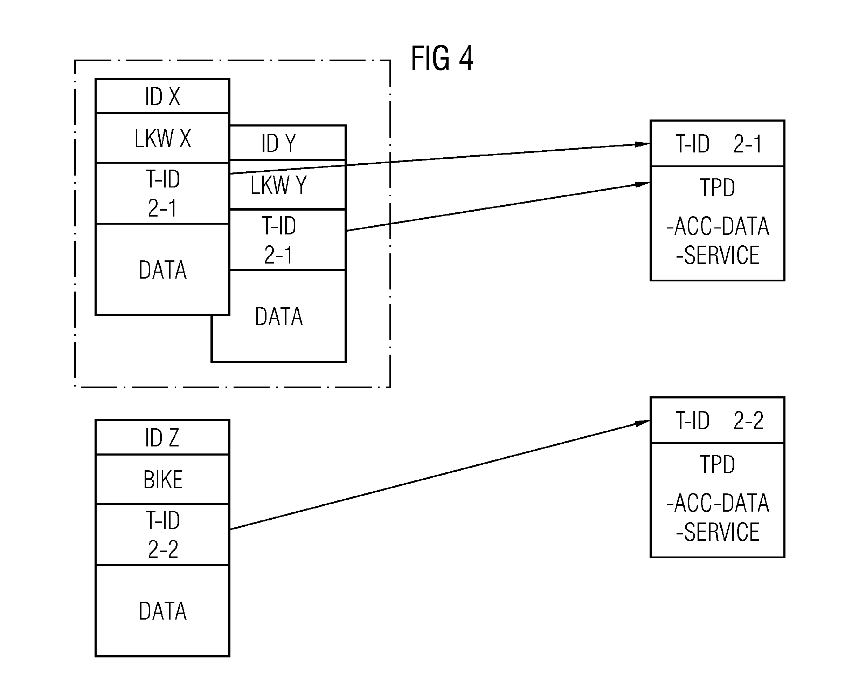

Figur 4 zeigt Beispiele für mögliche Datensätze für das in Figur 2 dargestellte Ausführungsbeispiel. Beispielsweise verfügt ein Herr Maier (Teilnehmer-ID = Maier) als Privatperson T-ID-1 über ein Mountainbike BIKE und ist im Berufsleben als Spediteur T-ID-2 tätig. Über seinen privaten PC 7-1 bzw. über seinen PC 7-2 im Büro kann sich Herr Maier als Privatperson (Teilnehmer-ID 2-1) oder in seiner Funktion als Spediteur (Teilnehmer-ID 2-2) nach einer entsprechenden Authentisierung bei dem Server 3 einloggen und seine Teilnehmerprofildaten TPD konfigurieren. Die Teilnehmerprofildaten TPD umfassen beispielsweise Abrechnungsdaten ACC-DATA, persönliche Daten sowie ausgewählte bzw. konfigurierte Dienstleistungen SERVICE. Als Privatperson möchte Herr Maier beispielsweise seine Freizeitaktivitäten als Mountainbike-Fahrer dokumentieren. In seiner Eigenschaft als Spediteur (Teilnehmer 2-2) möchte Herr Maier über die Fahrzeit und die Aufenthaltsorte seiner LKWs LKWX, LKWY informiert werden. Über die Benutzerschnittstelle des Servers 3 konfiguriert Herr Maier seine jeweiligen Teilnehmerprofildaten TPD und erhält dann über die Diensteplattform den entsprechenden gewünschten teilnehmerspezifischen Dienst (SERVICE) zur Verfügung gestellt.

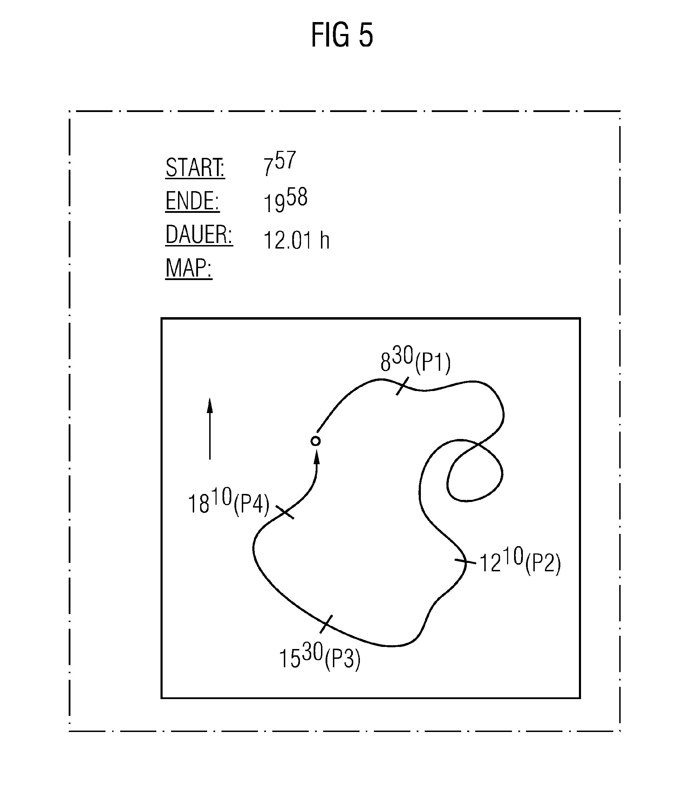

Beispielsweise erhält Herr Maier als Privatperson den Bericht über seine letzte Mountainbike-Tour, wie in Figur 5 dargestellt. Hierzu aktiviert Herr Maier an seinem Mountainbike 4-1 die daran befestigbare Erfassungseinheit 5-1 durch Betätigen eines entsprechenden Schalters. Am Ende der Tour deaktiviert Herr Maier die Erfassungseinheit 5 wieder. Auf Wunsch oder automatisch erhält er beispielsweise den Tourenplan der von ihm ausgeführten Tour, wie dies in Figur 5 dargestellt ist. Dieser Bericht wird vom Server 3 beispielsweise über das Netzwerk 6 auf den Privat PC 7-1 des Teilnehmers 2-1 (Privat) übertragen. In dem dargestellten Beispiel beginnt die Fahrradtour von Herrn Maier um 7.57 Uhr und endet um 19.58, wobei die Tourdauer 12.01 Stunden beträgt. Eine zusätzliche Karte MAP gibt den genauen Streckenverlauf mit einigen Positionspunkten wieder.

Das erfindungsgemäße System 1 ist vielseitig einsetzbar.

Bei einer möglichen Anwendung kann das erfindungsgemäße System 1 als elektronisches Fahrtenbuch eingesetzt werden. Sobald sich ein Teilnehmer 2 beispielsweise in seinen Wagen 4 setzt und eine entsprechende Taste drückt, um anzugeben, dass er sein Fahrzeug für die nächste Fahrt dienstlich nutzen möchte, werden durch die in dem Fahrzeug 4 angebrachte Erfassungseinheit 5 die entsprechenden Orts- und Zeitkoordinaten des Fahrzeugs 4 erfasst und an den Server 3 übermittelt. An dem Ende der Dienstfahrt drückt der Teilnehmer 2 wiederum die entsprechende Taste und kehrt in den Ausgangszustand zurück. Auf der Diensteplattform des Servers 3 hat der Teilnehmer 2 des Dienstes "Fahrtenbuch" sein Teilnehmerprofil hinterlegt, sodass die übertragenen Orts- und Zeitdaten mit seinem Kraftfahrzeug 4 in Verbindung gebracht werden können. Bei einer möglichen Ausführungsform ist das elektronische Fahrtenbuch dahingehend erweitert, dass der Server 3 über Daten des jeweiligen nationalen Steuerrechts oder sogar verschiedener benachbarter Länder verfügt.

Bei einer möglichen Ausführungsform kann der Teilnehmer 2 wählen, über welche Zeiträume die Auswertung des Fahrtenbuchs erfolgen soll und wie häufig ihm die Fahrtenbuchauszüge zugesendet werden sollen.

Bei einem weiteren Ausführungsbeispiel kann der Unternehmer eines Taxiunternehmens das erfindungsgemäße System 1 nutzen. Dabei wird in jedem Taxi an das mobile Gerät 4 eine zugehörige Erfassungseinheit 5 angebracht, die beispielsweise automatisch bei Anfahren des Fahrzeugs aktiviert wird.

Bei einer möglichen Ausführungsform wird zusätzlich die Identifikation des transportierten Passagiere erfasst, beispielsweise mittels einer Ausweiskarte des Passagiers oder mittels biometrischer Verfahren. Neben den Zeit- und Ortsdaten des Fahrzeugs 4 werden dann zusätzlich die Daten der beförderten Passagiere an die Diensteplattform des Servers 3 übertragen. Anhand der übertragenen Ort- und Zeitkoordinaten des Fahrzeugs 4 wird ein Fahrpreis errechnet und den beförderten Personen bzw. Passagieren in Rechnung gestellt. Bei dieser Konstellation zahlt der Passagier somit nicht mehr beim Fahrer des Taxis bzw. des Passagiertransportfahrzeugs, sondern direkt bei dem jeweiligen Transportunternehmen. Dies bietet sich insbesondere auch bei fahrerlosen Transportsystemen an. Der Betreiber des Transportunternehmens, beispielsweise der Taxiunternehmer, kann die durch das erfindungsgemäße System 1 zur Verfügung gestellte Dienstleistungsplattform auch den Zusatzdienst des Flotten-Managements nutzen, wobei beispielsweise die Auslastung, die Laufleistung und der Umsatz der jeweiligen Fahrzeuge 4 ausgewertet werden. Über einen weiteren Dienst, beispielsweise Geomonitoring, kann der Transportunternehmer ferner die aktuellen Standorte seiner Transportfahrzeuge überprüfen. Außerdem kann ein Transportunternehmer beispielsweise auch auswählen, welchen Dienstleister er für die Rechnungslegung an seine Kunden beauftragen möchte.

Ein weiteres Anwendungsbeispiel besteht beispielsweise in der Dokumentation von Freizeitaktivitäten, bei denen das mobile Erfassungsgerät bzw. die Erfassungseinheit 5 beispielsweise an einem Fahrrad angebracht wird und auf eine Biketour mitgenommen wird. Der Mountainbike-Fahrer kann beispielsweise die Tour mittels Kartenausschnitt in seinem Weblog übernehmen und kommentieren. Darüber hinaus können zusätzliche Auswertungen vorgenommen werden, wie beispielsweise die Anzahl der Höhenmeter pro Tag oder die zurückgelegte Strecke pro Tag.

In einem weiteren Anwendungsbeispiel ermöglicht das erfindungsgemäße System die Geo-Annotation von Multimedia-Daten, beispielsweise der von einer mobilen Kamera aufgenommenen Fotos. Die Kamera als mobiles Geräts 4 enthält dabei eine Erfassungseinheit 5, die die Ort- und Zeitkoordinaten an die Diensteplattform des Servers 3 liefert. Bei einer möglichen Ausführungsform erfolgt die Auslösung der Übertragung eines Datensatzes direkt mittels des Auslösers der Kamera 4. Bei einer alternativen Ausführungsform werden die Orts- und Zeitdaten kontinuierlich in regelmäßigen Abständen übertragen. In Kombination mit einem Zusatzdienst eines Web-basierten Fotoalbums kann der Teilnehmer seine Bilder archivieren und jederzeit, beispielsweise angereichert durch Geoinformationen, wieder abrufen. Die Geoinformationen können dabei wiederum beispielsweise durch Informationen über Sehenswürdigkeiten (Point of Interest) durch einen weiteren Drittanbieter angereichert werden.

In einem weiteren Anwendungsbeispiel werden mobile Messgeräte 4, beispielsweise Geräte zur Messung von Umweltparametern, wie Ozon, jeweils mit einer Erfassungseinheit 5 versehen. Das Messgerät 4 erzeugt nach dem Einschalten kontinuierlich Messdaten mit Zeitstempeln. Die Erfassungseinheit 5 wird zusätzlich an das mobile Gerät 4 angebracht und kann beispielsweise durch den Einschalter des Messgerätes 4 aktiviert werden. Mit Hilfe von Messdaten und der Zeit-/Positionsdaten kann dann ein spezieller Dienst durch die Diensteplattform des Servers 3 angeboten werden, beispielsweise das Anzeigen einer Karte mit Messdaten bzw. Umweltwerten.

Das erfindungsgemäße System 1 bietet somit eine Vielzahl verschiedener personalisierter Dienste über eine einzige Plattform. Das Spektrum der möglichen Dienstleistung reicht von einer elektronischen Fahrkarte, einem Mautsystem, einem Logistiksystem, einem Flotten-Management-System bis hin zu einem elektronischen Fahrtenbuch für Autos, Fahrräder und Fußgänger. Auch in der Landwirtschaft kann das erfindungsgemäße System 1 zur Verwaltung des Viehbestandes durch Landwirte benutzt werden.

Das erfindungsgemäße System 1 basiert beispielsweise auf der Infrastruktur eines bestehenden zellularen Netzes, etwa einem GSM-Netz, um die Orts- und Zeitdaten zu dem Server 3 zu übertragen.

## Patentansprüche

1. System (1) zum Bereitstellen teilnehmerspezifischer Dienste für Teilnehmer (2),
wobei eine an einer mobilen Einheit (4) eines Teilnehmers (2) angebrachte Erfassungseinheit (5) nach ihrer Aktivierung Zeitdaten und Ortsdaten der mobilen Einheit (4) in einer Aufzeichnungssprache über eine Funkschnittstelle an einen Server (3) überträgt, der anhand von Teilnehmerprofildaten des jeweiligen Teilnehmers (2) und der Zeit- und Ortsdaten einen teilnehmerspezifischen Dienst bereitstellt.

2. System nach Anspruch 1,
wobei die Erfassungseinheit (5) eine eindeutige Identifizierung (Global-ID) aufweist.

3. System nach Anspruch 1,
wobei die Erfassungseinheit (5) einen Schalter zur manuellen Aktivierung/Deaktivierung aufweist.

4. System nach Anspruch 1,
wobei die Erfassungseinheit (5) über eine Schnittstelle mit der mobilen Einheit (4) zur automatischen Aktivierung/Deaktivierung der mobilen Einheit (4) verbunden ist.

5. System nach Anspruch 1,
wobei die Erfassungseinheit (5) ein Modul (12) zur lokalen Erzeugung von Ortsdaten und ein Modul (13) zur lokalen Erzeugung von Zeitdaten aufweist.

6. System nach Anspruch 5,
wobei die Erfassungseinheit (5) einen Sender (17) aufweist, der die Zeitdaten und die Ortsdaten in einem XML-Datenformat mit der Identifizierung (Global-ID) der Erfassungseinheit (5) aussendet.

7. System nach Anspruch 6,
wobei die Zeit- und Ortsdaten der Erfassungseinheit (5) nach ihrer Aktivierung in regelmäßigen Zeitabständen ausgesendet werden.

8. System nach Anspruch 6,
wobei die Funkschnittstelle zwischen dem Sender (17) der Erfassungseinheit (5) und einer Basisstation (11) eines zellularen Funknetzes besteht.

9. System nach Anspruch 1,
wobei die Basisstation (11) über ein Datennetz (6) mit dem Server (3) verbunden ist.

10. System nach Anspruch 1,
wobei ein Teilnehmer (2) über ein Endgerät (7) seine Teilnehmerprofildaten bei dem Server (3)konfiguriert.

11. System nach Anspruch 1,
wobei die Erfassungseinheit (5) eine Verschlüsselungseinrichtung zur Verschlüsselung der Zeit- und Ortsdaten aufweist.

12. Erfassungseinheit (5) zur Erfassung von Zeit- und Ortsdaten für einen teilnehmerspezifischen Dienst, mit:
(a) einem Modul (12) zur lokalen Erzeugung von Ortsdaten;
(b) einem Modul (13) zur lokalen Erzeugung von Zeitdaten; und
(c) einem Sender (17), der nach Aktivierung der Erfassungseinheit (5) die erzeugten Zeit- und Ortsdaten in einer Aufzeichnungssprache über eine Funkschnittstelle überträgt.

13. Verfahren zum Bereitstellen teilnehmerspezifischer Dienste für Teilnehmer (2),
wobei eine an einer mobilen Einheit (4) eines Teilnehmers angebrachte Erfassungseinheit (5) nach ihrer Aktivierung Zeit- und Ortsdaten der jeweiligen mobilen Einheit (4) in einer Aufzeichnungssprache über eine Funkschnittstelle an einen Server (3) überträgt, der anhand von Teilnehmerprofildaten des jeweiligen Teilnehmers (2) und anhand der Zeit- und Ortsdaten einen teilnehmerspezifischen Dienst bereitstellt.
